# EUROPEAN PATENT APPLICATION

(11) **EP 2 679 970 A2**
(43) Date of publication of application: **01.01.2014**
(21) Application number: 13173444.4
(22) Date of filing: 24.06.2013
(51) Int. Cl.: G01K 11/16

(54) **Detecting an object having an elevated temperature**

(30) Priority: 25.06.2012 GB 201211314
(71) Applicant: Bombardier Transportation GmbH, 10785 Berlin (DE)
(72) Inventor: DECHERT, Martin, 67716 Heltersberg (DE); BÜNING, Andreas, 67133 Maxdorf (DE)
(74) Representative: Patentanwälte Bressel und Partner

(57) **Abstract**

The invention relates to a detector arrangement (10) for detecting an object (18) having an elevated temperature, the arrangement comprising:
● a light conducting body (12),
● a thermochromic layer (13) comprising thermochromic material adapted to change from an opaque state to a light transparent state with increasing temperature or vice versa, the thermochromic layer (13) being arranged in such a manner relative to the light conducting body (12) that light incident on the light conducting body (12) has to pass through the thermochromic layer (13) and
● a light detector (15) coupled with the light conducting body (12).

## Description

The invention relates to a detector arrangement for detecting an object having an elevated temperature. Furthermore, the invention relates to an arrangement for transferring energy from a primary side conductor assembly that produces an electromagnetic field, while an electric current flows through the conductor assembly, to a secondary side receiving device, that receives the electromagnetic field and produces an electric current by magnetic induction. In addition, the invention relates to a method of detecting an object having an elevated temperature. The invention also relates to a method of manufacturing a detector arrangement for detecting an object having an elevated temperature and to a method of manufacturing the transfer arrangement mentioned before.

WO 2010/031595 A2 discloses an arrangement for providing a vehicle, in particular a track bound vehicle, with electric energy, wherein the arrangement comprises a receiving device adapted to receive an alternating electromagnetic field and to produce an alternating electric current by electromagnetic induction.

The present invention can be applied in particular to the field of energy transfer to any land vehicle, in particular track bound vehicles, such as rail vehicles (e.g. trams), but also to road automobiles, such as individual (private) passenger cars or public transport vehicles (e.g. busses). Preferably, the primary side conductor arrangement of the generating device which produces the alternating electromagnetic filed is integrated in the track, road or parking area of the vehicle so that the electric lines of the primary side conductor arrangement extend in a plane which is nearly parallel to the surface of the road, track or parking area on which the vehicle may travel or may be parked.

Unlike conventional transformers for transferring energy from a primary side to a secondary side, there is a gap between the primary side conductor assembly and the secondary side receiving device that receives the electromagnetic field produced by the conductor assembly. During operation of the arrangement, electrically conducting material may be present in the gap, such as metal coins. In this case, the electromagnetic field produced by the conductor assembly will induce electric currents (in particular eddy currents) in the material, the electric currents will be damped due to the electric resistance of the material and, as a result, the temperature of the material will increase. In particular in case of high transfer power (such as in the range of more than 10 kW, especially of more than 100 kW), which may happen while the electrochemical energy storage of a parked vehicle is charged, the temperature of such material may increase to some hundred degrees centigrade. After charging, the vehicle may move on and there is a significant risk that the hot material causes damage and injuries.

It is therefore an object of the present invention to provide a detector arrangement for detecting an object having an elevated temperature, a transfer arrangement for transferring energy from a primary side conductor assembly to a secondary side receiving device, a method of detecting an object having an elevated temperature, a method of manufacturing the detector arrangement and the transfer arrangement, which reduce or eliminate the risk of damage and injuries. In particular, the detector arrangement shall be suited for being operated in connection with a transfer arrangement for transferring energy from a primary side conductor assembly to a secondary side receiving device.

According to a basic concept of the invention, thermochromic substances are used to detect an object having an elevated temperature. The temperature of the object is elevated if it is higher than the ambience temperature, in particular the temperature of the ambience of a transfer arrangement for transferring energy from a primary side conductor assembly to a secondary side receiving device. Especially, the temperature is elevated if it is increased to a pre-determined minimum temperature or to a pre-determined range of temperatures. It is preferred that the thermochromic properties of the substance or substances correspond to the elevated temperature or to the range of temperatures which are elevated. In particular, a thermochromic substance or thermochromic substances are chosen and its properties or their properties allow for detection of objects having corresponding elevated temperature. The heat which is transferred from the object having an elevated temperature causes a change of the light transmitting properties of the thermochromic substance or substances.

Generally speaking, thermochromic substances can change their colour due to a change in temperature. Therefore, for the purposes of the present invention, any thermochromic substance can be used in order to detect an object having an elevated temperature. As mentioned before, heat from the object is transferred to the thermochromic substance(s), in particular by radiation and/or by convection, and this causes a change in colour of the substance(s). Due to this change in colour, the thermochromic substance(s) has/have an opaque state, at least with reference to electromagnetic radiation in a specific range of wavelength. At other temperatures of the substance(s) it/they is/are no longer opaque with reference to the radiation at least within the mentioned range of wavelength.

In specific embodiments, a change in colour means that the thermochromic substance(s) is/are opaque for radiation in a first range of wavelengths before the change and is opaque for radiation in a second, other range of wavelengths after the change. For example, the colour may change from blue to yellow or red with increasing temperature. However, the present invention is not restricted to specific colour changes and is not restricted to the wavelength range of radiation which is visible to humans. For example, the property of a thermochromic substance to be transparent for infrared radiation at specific temperatures can be used for the purposes of the present invention. However, it is preferred that light in the visible wavelength range, which has passed a layer comprising thermochromic material, is detected for the purposes of the present invention. Therefore, a corresponding light detector is used, preferably. In this description, "light" is used as a synonym for electromagnetic radiation. Light in the visible range is the radiation which is preferred for the purposes of the present invention. Moreover, it is preferred that the detection of light which has passed through the thermochromic material is not sensitive to specific colour ranges in the visible range of light. Therefore, it is preferred that the thermochromic material (i.e. the thermochromic substance or substances) is/are opaque for visible light in a first state (the "opaque state") at temperatures when there is no object having an elevated temperature, and is in a transparent state for visible light when there is an object having an elevated temperature. For example, the thermochromic material may be black (i.e. it absorbs light) or may be white (i.e. reflects all light) in the opaque state. In any case, it is preferred that the change of colour is reversible, e.g. the opaque material can change its colour with increasing temperature and can cool down again to its initial opaque state. Alternatively, the heat which is transferred from the object may change the thermochromic material from being transparent to being opaque.

Thermochromic material in any available form can be used. For example, the thermochromic material may be a liquid crystal or a leuco dye or a mixture of leuco dyes. Especially leuco dyes can be used dispersed in a matrix of other material, in particular plastic material, such as thermoplastics, duroplastics, gels or other kind of plastic material. In particular, polymers are suitable as a matrix for carrying dispersed thermochromic material. Therefore, "matrix" is not to be understood having regular rows and columns. Rather, the matrix material only has the function of embedding the thermochromic material. Another form of using thermochromic material is an ink. Still another form is a lacquer. In both cases, the thermochromic material (in particular a leuco dye or mixture of dyes) is mixed with at least one other component of the ink or lacquer. As a result, the surface of a body made of other material can be coated with the ink or lacquer to form a layer comprising thermochromic material. Any liquid component of the ink or dye may dry, may be dried and/or may evaporate so that the coating hardens and forms a permanent solid layer comprising the thermochromic material. In addition or alternatively, the ink or lacquer may be cured, such as by using ultraviolet radiation. According to a further alternative, the ink or lacquer may be a mixture of at least two components additionally comprising the thermochromic material and the at least two components may form a compound during the time interval after applying the ink or lacquer on the surface or within a mould, thereby forming a layer or body of permanent shape. Still another form of using thermochromic material is a foil, for example a plastic film or plastic sheet, wherein the foil comprises the thermochromic substance(s).

According to alternative embodiments of the invention, thermochromic material is used which is adapted to change from an opaque state to a light transparent state with decreasing temperature, i.e. heat from an object having an elevated temperature changes the state of the thermochromic material from the light transparent state to the opaque state.

According to a further aspect of the invention, light which has passed through the thermochromic material in the light transparent state is detected by a light detector, which comprises at least one sensor that produces a signal if light is incident to the sensor. Therefore, the invention comprises embodiments, which comprise a light detector having sensors at different locations. In particular, the different sensors may be placed on different sides of a light conducting body and/or may be connected to a light conducting body via different light conductors (such as glass fibre cables).

Depending on the properties of the thermochromic material mentioned above, the light detector either detects light when there is an object having an elevated temperature and, therefore, the thermochromic material is in the transparent state, or the light detector detects light when there is no object having an elevated temperature and, therefore, the thermochromic material is in the transparent state. For example, the sensor or sensors may be photodiode(s).

In particular, the thermochromic material and a light conducting body are arranged in such a manner that light incident on the light conducting body has to pass through the thermochromic layer. Although preferred, this does not necessarily mean that all light which is incident on the light conducting body has to pass through the thermochromic layer. For example, the thermochromic layer may be arranged on one side of the light conducting body and other sides of the light conducting body may be covered by opaque material. Although not preferred, some light may pass though the opaque material to the light conducting body and/or some light may be incident on the light conducting body through gaps of the opaque material.

The light detector is coupled with the light conducting body so that light which is incident on the light conducting body is conducted by the light conducting body to the light detector.

In particular, the light conducting body may consist of a light transparent material which has a higher refractive index than neighbouring material, so that total reflection occurs. The use of a light conducting body has the advantage, that the light detector can be placed at a distance to the thermochromic material. Especially with respect to the transfer of electromagnetic energy to a vehicle, the light detector can be placed at a location where the flux density of the magnetic field is small (in particular smaller by a divisor of at least ten or preferably at least one hundred and most preferred at least one thousand) compared to the location of the highest magnetic flux density. Furthermore, the light conducting body in combination with the thermochromic material allows for a purely optical measurement procedure and is therefore independent of the electromagnetic or magnetic field.

For example, in some of the embodiments and variants described above, it may happen that not all light which is incident on the light conducting body is conducted to the light detector. Furthermore, as mentioned above as well, some light may be incident on the light conducting body which has not passed through the thermochromic material. In order to reliably detect the transparent state of the thermochromic layer, it is preferred that it is decided that the thermochromic layer is in the transparent state if the light detector receives light having at least a predetermined minimum flux density (i.e. light intensity). According to an alternative embodiment, it is decided that the thermochromic layer is in the transparent state if the light detector receives light with a flux density within a predetermined range of possible flux densities (i.e. the minimum and the maximum value of the flux density is predetermined). For example, it may be decided that there is an error if the predetermined maximum flux density is exceeded. In any case, a predetermined minimum flux density guarantees that small flux densities are not recognized as indicating the transparent state. In the process of predetermining the minimum (and optionally also the maximum) flux density, typical illumination conditions and a typical object having a typical elevated temperature in an expected location relative to the thermochromic layer can be considered. In addition or alternatively, experiments can be made in order to set the predetermined value(s). The temperature of the object, the size of the object and the location of the object relative to the thermochromic material may influence the optical properties of the thermochromic material with respect to the amount of light per time interval which passes through the thermochromic material at a given illumination. Of course, increased illumination will result in an increased amount of light per time interval. In particular, larger objects and higher temperatures of the object or objects will lead to larger areas of the thermochromic material becoming transparent (or according to the alternative embodiment, becoming opaque).

Preferably, the light conducting body comprises a side (e.g. defined by a surface of the light conducting body) which is to be oriented toward an area, in which an object having an elevated temperature may be placed.

In particular, the following is proposed: A detector arrangement for detecting an object having an elevated temperature, the arrangement comprising:
● a light conducting body,
● a thermochromic layer comprising thermochromic material adapted to change from an opaque state to a light transparent state with increasing temperature or vice versa, the thermochromic layer being arranged in such a manner relative to the light conducting body that light incident on the light conducting body has to pass through the thermochromic layer and
● a light detector coupled with the light conducting body.

In addition, a method is proposed of detecting an object having an elevated temperature, the method comprising:
● allowing light to pass through a thermochromic layer comprising thermochromic material, wherein heat from the object changes the state of the thermochromic material from an opaque state to a light transparent state or vice versa,
● receiving the light, which passed through the thermochromic layer, by a light conducting body,
● guiding the light within the light conducting body toward a light detector coupled with the light conducting body and
● detecting the light using the light detector, thereby detecting the presence or absence of the object having an elevated temperature.

Furthermore, a method is proposed of manufacturing a detector arrangement for detecting an object having an elevated temperature, the method comprising:
● providing a light conducting body,
● arranging a thermochromic layer on at least one side of the light conducting body,
   wherein the thermochromic layer is provided with thermochromic material adapted to change from an opaque state to a light transparent state with increasing temperature or vice versa and
● coupling a light detector with the light conducting body.

The thermochromic layer comprising thermochromic material may be in any of the forms mentioned above. In particular, the layer (which does not necessarily, but preferably, have a constant layer thickness) may be mechanically connected to the light conducting body. It is preferred that the thermochromic layer is a layer carried by and covering a surface of the light conducting body.

According to a specific embodiment which has a particularly flat configuration which is able to detect objects having an elevated temperature in a wide area, the light conducting body is preferably shaped as a plate having a planar surface covered by the thermochromic layer. If an object having an elevated temperature is placed in the area which is faced by the thermochromic layer, the thermochromic layer will be heated and will either become transparent or opaque in the region facing the object.

The light conducting body may be located on a first side of the thermochromic layer and a protective cover may be located on a second side, opposite to the first side, of the thermochromic layer. The protective cover protects the thermochromic layer from external influences, in particular mechanical damage by impacting parts. Optionally, the thermochromic layer may be in mechanical contact with the light conducting body and the protective cover, but there are other possible embodiments. The protective cover may form the outer surface of the arrangement which faces the area where objects having an elevated temperature can be detected.

According to one embodiment, the cover is transparent for light. In this case, light from the ambience can pass through the cover and can also pass through the thermochromic layer, provided that the thermochromic layer or an area of the thermochromic layer is in the transparent state.

An example of a protective cover is made from plastic material. The thickness of the protecting cover is preferably less than 3 mm, in particular less than 1 mm and most preferred less than 0.5 mm. A protective cover having a small thickness has two advantages. It does not significantly reduce the flux density of the passing light and it does not significantly contribute to the thermal capacity of the arrangement, i.e. heat emitted by an object can pass the protective cover.

In any case, the thermochromic layer may be formed by the protective cover which covers the light conducting body on a first side, wherein the thermochromic material is dispersed in light transparent material of the protective cover. Therefore, there is no need for an additional protective cover. In particular, the protective cover may be a light transparent polymer.

In particular, a light emitting device can be located beyond the thermochromic layer, if viewed from the light conducting body. For example, the light emitting device may be an array of light emitting diodes (LEDs). During operation of the arrangement, light emitted by the light emitting device can pass through the thermochromic layer, if the thermochromic layer is in the transparent state. Using a light emitting device has the advantages that the illumination of the thermochromic layer can be controlled and objects having an elevated temperature can be detected which are located in dark or shaded area. In addition, not only the amount of light, which is produced by the light emitting device per time interval, can be controlled, but also the amount of light per time interval as a function of time. For example, the intensity of the light can be increased, decreased or both according to a predetermined function of time and it can be decided that the thermochromic layer is in the transparent state only, if the same or a similar time-dependent behaviour is observed with the detection signal produced by the light detector which is coupled with the light conducting body. For example, the light emitted by the light emitting device can be pulsed at a predetermined pulse frequency.

According to a specific embodiment, a protective cover which is opaque for light may be located beyond the light emitting device if viewed from the light conducting body. In this manner, the light emitting device can be mechanically protected and the detector arrangement can be shielded against light from the ambiance by the protective cover. Again, the components (here: the light emitting device and the protective cover) should be as thin as possible, so that heat from an object having an elevated temperature can pass though the cover and the light emitting device to the thermochromic layer. For example, the light emitting device may comprise OLEDs (organic light emitting diodes) and/or a thin plastic protective cover, for example made of a polymer.

Furthermore, the following also belongs to the present invention: A transfer arrangement for transferring energy from a primary side conductor assembly, that produces an electromagnetic field while an electric current flows through the conductor assembly, to a secondary side receiving device, that receives the electromagnetic field and produces an electric current by magnetic induction, wherein the transfer arrangement comprises
● the primary side conductor assembly and/or the secondary side receiving device and
● the detector arrangement of one of the embodiments described above or below,
   wherein the detector arrangement is located in an area through which the electromagnetic field extends during transfer of energy from the primary side conductor assembly to the secondary side receiving device.

For example, the primary side conductor assembly may be integrated in the track or the base (e.g. the ground) of a parking place of a vehicle and the vehicle may comprise the secondary side receiving device (e.g. at the underside of the vehicle facing downward), wherein the receiving device is placed above the primary side conductor assembly. Typically, there is a gap between the conductor assembly and the secondary side receiving device and the detector arrangement of the present invention is preferably placed in the gap. The gap includes any solid material in between the conductor assembly and the secondary side receiving device. Therefore, the detector arrangement can be integrated as well in the track, base or ground.

Furthermore, the invention includes a method of manufacturing the transfer arrangement, comprising the steps:
● a primary side conductor assembly is provided, that produces an electromagnetic field while an electric current flows through the conductor assembly,
● a secondary side receiving device is provided, that receives the electromagnetic filed and produces an electric current by magnetic induction,
● the detector arrangement according to one embodiment described above or below is located in an area through which the electromagnetic field extends during transfer of energy from the primary side conductor assembly to the secondary side receiving device.

Examples of the invention will be described with reference to the attached figures in the following. The figures show:
- Fig. 1: schematically a side view of a primary side conductor assembly buried in the ground and a vehicle having a secondary side receiving device,
- Fig. 2: schematically a side view of an arrangement comprising a primary side conductor assembly and a secondary side receiving device, wherein a detector arrangement for detecting the presence of an object having an elevated temperature is attached to the secondary side receiving device,

- Fig. 3: an arrangement similar to the arrangement shown in Fig. 2, wherein the detector arrangement is attached to the primary side conductor assembly,
- Fig. 4: schematically an exploded side view of a detector arrangement,
- Fig. 5: schematically an exploded side view of another detector arrangement,
- Fig. 6: the detector arrangement of Fig. 4 and an object having an elevated temperature,
- Fig. 7: the detector arrangement of Fig. 5 and an object having an elevated temperature,
- Fig. 8: schematically an exploded side view of a further detector arrangement and an object having an elevated temperature, wherein the detector arrangement comprises a plurality of light conducting bodies, and
- Fig. 9: schematically an exploded side view of still another detector arrangement and of an object having an elevated temperature.

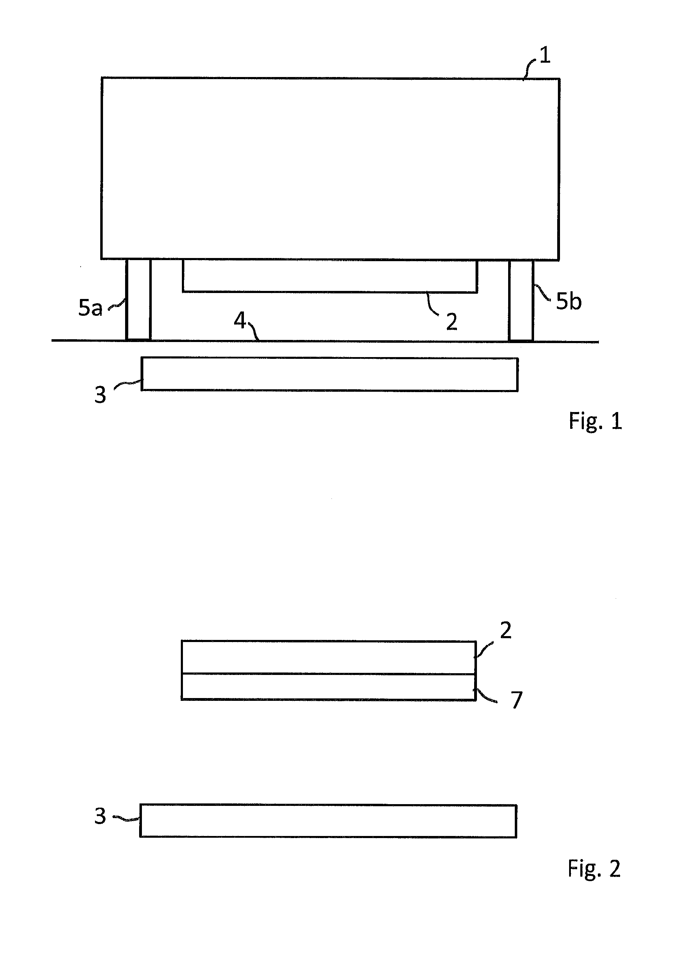

The vehicle 1 which is schematically shown in Fig. 1 comprises a secondary side receiving device 2 for receiving an electromagnetic field produced by a primary side conductor assembly 3 which is buried in the ground. The surface of the ground is denoted by 4. For example, the vehicle 1 drives on wheels 5a, 5b on the surface 4 of the ground. Alternatively, the wheels may roll on rails during operation, if the vehicle is a rail vehicle.

The primary side conductor assembly 3 produces the electromagnetic field, for example while the vehicle is driving. Alternatively, the vehicle 1 may stop or may be parked while the electromagnetic field energy is transferred to the receiving device 2 of the vehicle.

Especially if the vehicle may drive during transfer of electromagnetic energy to its receiving device 2, it is preferred that the detector arrangement 7 of the present invention is attached to the receiving device 2, as shown in Fig. 2. However, the example shown in Fig. 2 is not restricted to the use while the vehicle drives.

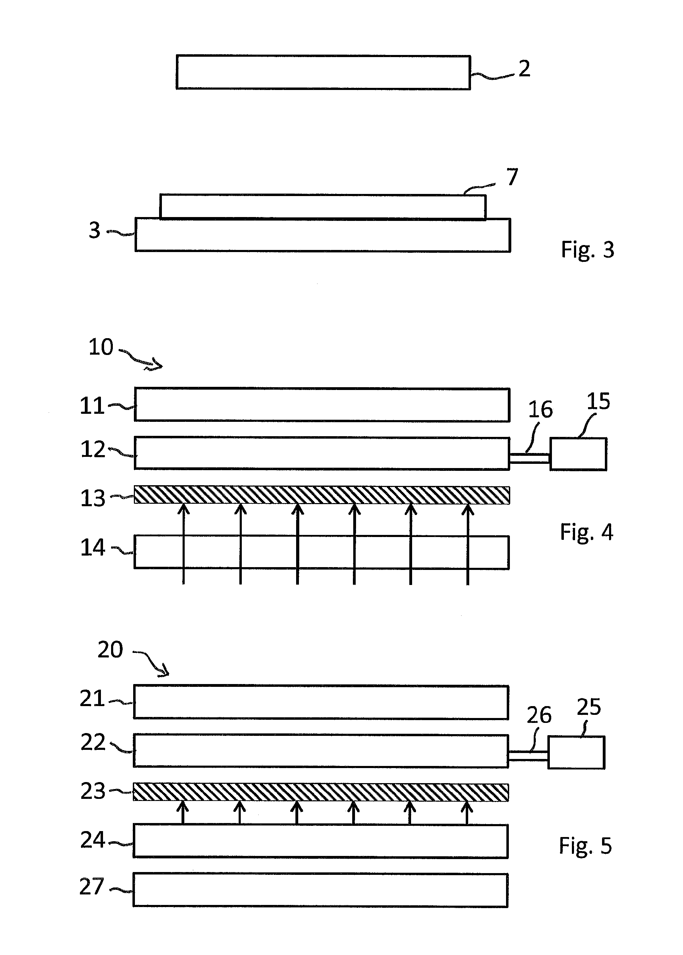

Alternatively, in particular if a vehicle is provided with electromagnetic energy while it stops or is parked, the detector arrangement 7 may be attached to the primary side conductor assembly 3 as shown in Fig. 3. Any vehicle, to which the secondary side receiving device 2 is attached, is not shown in Fig. 2 or Fig. 3.

The detector arrangement 10 shown in Fig. 4, which may be used as the detector arrangement 7 of Fig. 2 or Fig. 3, comprises an optional top cover 11 which may be provided for the purpose of protecting the light conducting body 12 directly under the top cover 11 and/or for the purpose of reflecting light within the light conducting body 12 at the boundary surface between the top cover 11 and the light conducting body 12. As shown in Fig. 4 and in further embodiments of Fig. 5, Fig. 8 and Fig. 9, the detector arrangement may comprise several layers which are stacked upon each other to form the main body of the detector arrangement. In each case, the main body comprises a layer formed by a light conducting body or by a plurality of light conducting bodies as well as a thermochromic layer comprising thermochromic material. The form of the thermochromic layer may differ and at least one optional cover may be present above the layer of light conducting body or bodies or below the thermochromic layer. However, the orientation shown in Fig. 2 and Fig. 4 to 9 is optional. As for example shown in Fig. 3, the detector arrangement may be adapted to detect an object having an elevated temperature which is located above the detector arrangement. Therefore, the thermochromic layer is located above the light conducting layer in case of the arrangement shown in Fig. 3. Other embodiments and other orientations are also possible. For example, the detector arrangement may be held at a position approximately halfway in between the primary side conductor assembly and the secondary side receiving device. In this case, a first thermochromic layer may be located on the side of the light conducting body facing the primary side conductor assembly and a second thermochromic layer may located on the side of the light conducting body facing the secondary side receiving device. Therefore, the detector arrangement is sensitive to hot bodies on either side of the detector arrangement. This detector arrangement could alternatively be oriented in the horizontal direction, so that hot object can be detected on the left hand side and the right hand side of the arrangement, for example.

In case of the embodiment shown in Fig. 4, there is a bottom cover 14 of light transparent material and the thermochromic layer 13 is arranged in between the light conducting body 12 and the bottom cover 14. At least one of the covers 11, 14 may be a thin layer (e.g. less than 1 mm thick) of polymer. However, it is preferred that the top cover 11 is not transparent for light, while the bottom cover 14 is transparent for light. The property of being transparent for light is indicated by several arrows pointing from the bottom to the top and extending through the bottom cover 14.

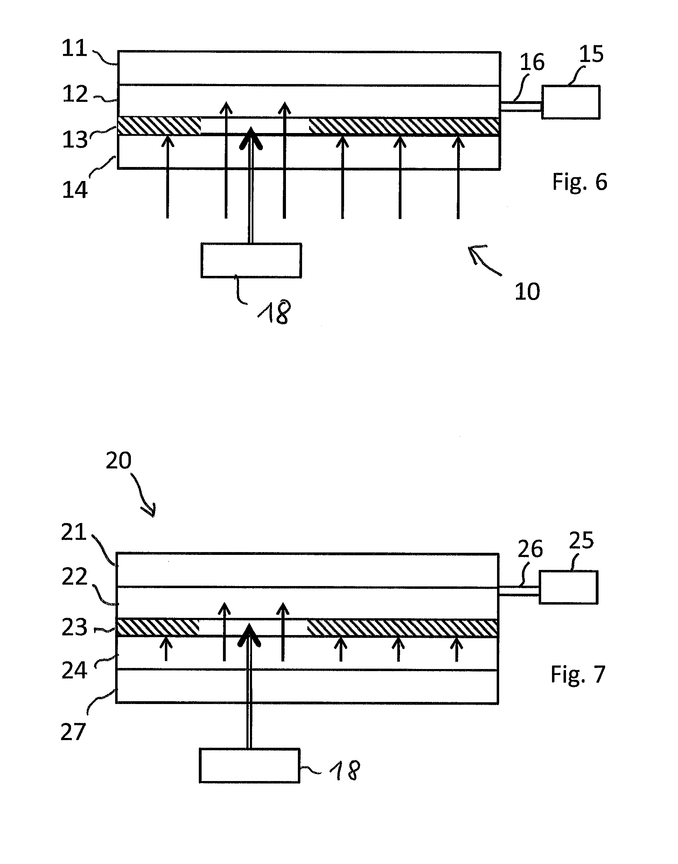

A light conductor 16, such as a glass fibre cable is connected to one side of the light conducting body 12 so that light which is incident to the light conducting body (Fig. 6) is conducted through the light conductor 16 to a light detector 15, which may be an array of photodiodes or may comprise a single photodiode.

As shown in Fig. 6, during operation while an object 18 having an elevated temperature is located below the detector arrangement 10, heat (as indicated by a double-line arrow) is transferred from the object 18 to the thermochromic layer 13 so that at least the area of the thermochromic layer 13 which faces the object 18 changes its state from opaque to transparent and the light from the ambience can pass through the thermochromic layer 13 and is incident on the light conducting body 12.

Optionally, and this does not apply to the embodiment shown in Fig. 4 and Fig. 6 only, the light conducting body may comprise light scattering material and/or fluorescent material so that scattered light and/or light produced by fluorescence is conducted by the light conductor 16 to the light detector 15.

Optionally, the side of the light conducting body 12 which is opposite to the light conductor 16 may be provided with material which reflects light so that the light which is received by the light detector 15 is increased.

The second embodiment of a detector arrangement 20 shown in Fig. 5 also comprises an optional top cover 21 which can be omitted for example if the detector arrangement is directly attached to the underside of the secondary side receiving device (for example shown in Fig. 2). The detector arrangement 20 also comprises a light conducting body 22, a light conductor 26 and a light detector 25, which may have the same configuration as described before with reference to Fig. 4 and Fig. 6.

The thermochromic layer 23 of detector arrangement 20 is arranged in between the light conducting body 22 and a light emitting device 24, which may be an array of organic light emitting diodes. It is preferred that the detector arrangement 20 comprises a bottom cover 27 made of material which is not transparent for light.

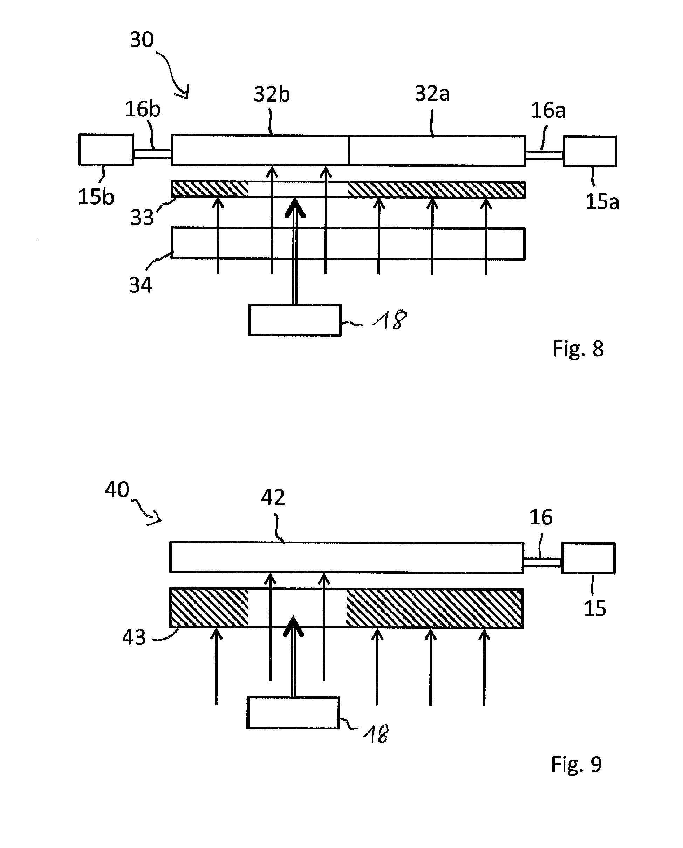

During operation, the light emitting device 24 emits light toward the thermochromic layer 23. If a hot body 18 is present and, therefore, at least an area of the thermochromic layer 23 is transparent, light emitted by the light emitting device 24 passes through the thermochromic layer 23 as shown in Fig. 7 and is conducted by the light conducting body 22 and the light conductor 26 to the light detector 25. The detector arrangement 30 shown in Fig. 8 comprises a layer of at least two neighbouring light conducting bodies 32a, 32b, each of which is connected via a light conductor 16a, 16b to a light detector 15a, 15b. However, the boundary surface of the neighbouring light conducting bodies 32 is not transparent for light. Optionally, a light reflecting material can be placed in between the light conducting bodies 32.

Otherwise, the detector arrangement 30 can be constructed in the same manner as described above or below. In the exemplary embodiment shown in Fig. 8, the detector arrangement 30 comprises a light transparent bottom cover 34 and a single thermochromic layer 33 in between the bottom cover 34 and the layer of light conducting bodies 32.

During operation, while a hot body 18 is present below the bottom cover 34, an area of the thermochromic layer 33 is transparent for light so that light from the ambience (or, alternatively, from a light emitting device of the detector arrangement) can pass through the thermochromic layer 33. In the specific operating state shown in Fig. 8, the transparent area of the thermochromic layer 33 is located below the light conducting body 32b and there is no transparent area under the light conducting body 32a. Therefore, the second light detector 15b detects light indicating that there is a hot object 18 but the first light detector 15a does not detect such light.

In this manner, the location of the hot body 18 can be detected. The resolution of the location detection depends on the construction of the detector arrangement (especially it depends on the optical properties of the thermochromic layer and depends on the heat capacity and heat conductivity of any cover and other materials of the detector arrangement.

More generally speaking, the detector arrangement may comprise at least two light conducting bodies, wherein each light conducting body is coupled with a separate light detector. Preferably, there is a continuous thermochromic layer covering at least two of the light conducting bodies.

According to the embodiment shown in Fig. 9, the thermochromic layer 43 is realized by a cover layer. The detector arrangement 40 therefore comprises at least a light conducting body 42 and a cover 43 comprising thermochromic material. In the embodiment shown, the light conducting body 42 is connected to a light detector 15 via a light conductor 16, similar to the arrangement shown in Fig. 4 and Fig. 6.

If a hot body 18 is present below the cover 43, light can pass through the cover 43 where the thermochromic material has become transparent. The light is conducted by the light conducting body 42 to the light conductor 16 and to the light detector 15.

## Claims

1. A detector arrangement (10; 20; 30; 40) for detecting an object (18) having an elevated temperature, the arrangement comprising:
● a light conducting body (12; 22; 32a, 32b; 42),
● a thermochromic layer (13; 23; 33; 43) comprising thermochromic material adapted to change from an opaque state to a light transparent state with increasing temperature or vice versa, the thermochromic layer (13; 23; 33; 43) being arranged in such a manner relative to the light conducting body (12; 22; 32a, 32b; 42) that light incident on the light conducting body (12; 22; 32a, 32b; 42) has to pass through the thermochromic layer (13; 23; 33; 43) and
● a light detector (15; 25) coupled with the light conducting body (12; 22; 32a, 32b; 42).

2. The detector arrangement of the preceding claim, wherein the thermochromic layer (13; 23; 33; 43) is mechanically connected to the light conducting body (12; 22; 32a, 32b; 42).

3. The detector arrangement of the preceding claim, wherein the light conducting body (12; 22; 32a, 32b; 42) is shaped as a plate having a planar surface covered by the thermochromic layer (13; 23; 33; 43).

4. The detector arrangement of one of the preceding claims, wherein the light conducting body (12; 22; 32a, 32b) is located on a first side of the thermochromic layer (13; 23; 33) and wherein a protective cover (14; 27; 34) is located on a second side, opposite to the first side, of the thermochromic layer (13; 23; 33).

5. The detector arrangement of the preceding claim, wherein the cover (14; 34) is transparent for light.

6. The detector arrangement of one of claims 1 - 3, wherein the thermochromic layer (43) is formed by a protective cover covering the light conducting body (42) on a first side and wherein the thermochromic material is dispersed in light transparent material of the protective cover.

7. The detector arrangement of one of the preceding claims, wherein a light emitting device (24) of the detector arrangement (20) is located beyond the thermochromic layer (23) if viewed from the light conducting body (22).

8. The detector arrangement of claim 7, wherein a protective cover (27) which is opaque for light is located beyond the light emitting device (24) if viewed from the light conducting body (22).

9. A transfer arrangement for transferring energy from a primary side conductor assembly, that produces an electromagnetic field while an electric current flows through the conductor assembly, to a secondary side receiving device, that receives the electromagnetic field and produces an electric current by magnetic induction, wherein the transfer arrangement comprises
● the primary side conductor assembly and/or the secondary side receiving device and
● the detector arrangement(7) of one of the preceding claim
wherein the detector arrangement (7) is located in an area through which the electromagnetic field extends during transfer of energy from the primary side conductor assembly (3) to the secondary side receiving device (2).

10. A method of detecting an object having an elevated temperature, the method comprising:
● allowing light to pass through a thermochromic layer (13; 23; 33; 43) comprising thermochromic material, wherein heat from the object changes the state of the thermochromic material from an opaque state to a light transparent state or vice versa,
● receiving the light, which passed through the thermochromic layer (13; 23; 33; 43), by a light conducting body (12; 22; 32a, 32b; 42),
● guiding the light within the light conducting body (12; 22; 32a, 32b; 42)toward a light detector (15; 25) coupled with the light conducting body (12; 22; 32a, 32b; 42) and
● detecting the light using the light detector (15; 25), thereby detecting the presence or absence of the object having an elevated temperature.

11. The method of claim 10, wherein the light or part of the light, which passes through the thermochromic layer (13; 33; 43), is light incident from the ambience.

12. The method of claim 10 or 11, wherein the light or part of the light, which passes through the thermochromic layer (23), is light emitted by a light emitting device (24) located beyond the thermochromic layer (23) if viewed from the light conducting body (22).

13. A method of manufacturing a detector arrangement (10; 20; 30; 40) for detecting an object (18) having an elevated temperature, the method comprising:
● providing a light conducting body (12; 22; 32a, 32b; 42),
● arranging a thermochromic layer (13; 23; 33; 43) on at least one side of the light conducting body (12; 22; 32a, 32b; 42), wherein the thermochromic layer (13; 23; 33; 43) is provided with thermochromic material adapted to change from an opaque state to a light transparent state with increasing temperature or vice versa and
● coupling a light detector (15; 25) with the light conducting body (12; 22; 32a, 32b; 42).

14. The method of the preceding claim, wherein the thermochromic layer (13; 23; 33; 43) is mechanically connected to the light conducting body (12; 22; 32a, 32b; 42).

15. The method of claim 13 or 14, wherein the light conducting body (12; 22; 32a, 32b; 42) is shaped as a plate having a planar surface and the planar surface is covered by the thermochromic layer (13; 23; 33; 43).

16. The method of one of claims 13 - 15, wherein the light conducting body (12; 22; 32a, 32b) is located on a first side of the thermochromic layer (13; 23; 33) and wherein a protective cover (14; 27; 34) is located on a second side, opposite to the first side, of the thermochromic layer (13; 23; 33).

17. The method of one of claims 13 - 15, wherein the thermochromic layer (43) is formed by a protective cover covering the light conducting body (42) on a first side and wherein the thermochromic material is dispersed in light transparent material of the protective cover.

18. The method of one of claims 13 - 17, wherein a light emitting device (24) of the arrangement is located beyond the thermochromic layer (23) if viewed from the light conducting body (22).

19. The method of claim 18, wherein a protective cover (27) which is opaque for light is located beyond the light emitting device (24) if viewed from the light conducting body (22).
